# EUROPÄISCHE PATENTSCHRIFT

(11) **EP 0 495 935 B1**
(45) Veröffentlichungstag und Bekanntmachung des Hinweises auf die Patenterteilung: **24.01.1996**
(21) Anmeldenummer: 91911261.5
(22) Anmeldetag: 27.06.1991
(51) Int. Cl.: G01L 9/00, G01L 23/18

(54) **VERFAHREN ZUR HERSTELLUNG EINES DRUCKGEBERS ZUR DRUCKERFASSUNG IM BRENNRAUM VON BRENNKRAFTMASCHINEN**
METHOD OF MANUFACTURING A PRESSURE SENSOR FOR DETERMINATION OF THE PRESSURE IN A COMBUSTION CHAMBER OF AN INTERNAL-COMBUSTION ENGINE
PROCEDE DE FABRICATION D'UN CAPTEUR DE PRESSION POUR LA DETERMINATION DE LA PRESSION DANS LA CHAMBRE DE COMBUSTION DE MOTEURS A COMBUSTION INTERNE

(30) Priorität: 18.07.1990 DE 4022781; 07.02.1991 DE 4103705
(43) Veröffentlichungstag der Anmeldung: 29.07.1992
(73) Patentinhaber: ROBERT BOSCH GMBH, D-70442 Stuttgart (DE)
(72) Erfinder: BENEDIKT, Walter, D-7014 Kornwestheim (DE); VOGEL, Manfred, D-7257 Ditzingen Heimerdingen (DE); HERDEN, Werner, D-7016 Gerlingen (DE); SCHMIDT, Wolfgang, D-7143 Vaihingen/Enz (DE); KUESELL, Matthias, D-7015 Korntal-Münchingen 2 (DE); STANGLMEIER, Frank, D-7141 Möglingen (DE)
(86) Internationale Anmeldenummer: DE9100527
(87) Internationale Veröffentlichungsnummer: WO9201915

(56) Entgegenhaltungen:
- DE-A- 3 339 875
- FR-A- 2 626 670
- US-A- 4 567 751
- US-A- 4 606 228

## Beschreibung

### Stand der Technik

Die Erfindung bezieht sich auf ein Verfahren zur Herstellung eines Druckgebers zur Druckerfassung im Brennraum von Brennkraftmaschinen. Bei einem derartigen, aus der DE-OS 31 25 640.6 bekannten Druckgeber sind die piezoresistiven Meßelemente, wie zum Beispiel Dickschichtwiderstände aus Cermet, Contactivplastic oder Metall auf einem Träger aufgebracht. Das Widerstandselement und der Träger sind möglichst nahe am Druckraum angeordnet, um den herrschenden Druck bestimmen zu können. Ferner wird das Meßsignal mit Hilfe von elektrischen Leitungen zü einer außerhalb des Gehäuses des Druckgebers angeordneten elektronischen Auswerteschaltung geführt. Dadurch müssen die piezoresistiven Elemente und die elektronischen Bauteile mit Hilfe von abgeschirmten Leitungen aufwendig miteinander verbunden werden. Da das piezotesistive Meßelement direkt dem Druck ausgesetzt ist, ist es auch den im Bretnraum herrschenden hohen Temperaturen ausgesetzt. Die Flammen breiten sich dort mit einer Temperatur von ca. 2000° C aus, wodurch sich Verspannungen im Gehäuse ergeben können. Dadurch wird das Drucksignal durch die hohen Temperaturen verfälscht

Aus der US-A-4 567 751 ist ein Verfahren zur Herstellung eines Sensors bekannt, bei dem das Piezoelement, der Stempel und der Isolator in einen separaten Sensorkörper in der Form einer vormontierten Baueinheit zusammengebaut werden. Diese vormontierte Baueinheit wird dann in das Gehäuse des Druckaufnehmers eingesetzt. Mit Hilfe eines am Stempel angebrachten Fortsatzes ist der Stempel bzw. die vormontierte Baueinheit an der Membran mechanisch justiert. Dadurch ist die bereits vor dem Einbau auf ihre Funktionsfähigkeit überprüfbare vormontierte Einheit mechanisch auf die Lage der Membran abgestimmt. Weitere Eichungen sind somit nicht mehr notwendig.

Ferner ist aus der EP-A-0 179 278 ein Drucksensor bekannt, bei dem der Dickschichtwiderstand am Boden eines Trägers angeordnet ist. Dieser Drucksensor ist aber nur für die Bestimmung des Drucks in Verteilerpumpen vorgesehen. Die im Brennraum herrschenden hohen Temperaturen würden auch bei dieser Ausführung das Meßsignal verfälschen.

In der US-PS 4 645 965 ist ein Drucksensor beschrieben, dessen Meßelement aus piezoelektrischem Material besteht. Dieses piezoelektrische Element ist in einem Gehäuse angeordnet, das zum Brennraum hin eine Öffnung aufweist. Diese Öffnung ist mit einer Membran abgeschlossen, wobei das piezoelektrische Element über einen Stempel mit dieser Membran und somit mit dem im Verbrennungsraum herrschenden Druck in Wirkverbindung steht. Das piezoelektrische Element liegt an einer im Gehäuse ausgebildeten Schulter an. Durch die Verwendung des piezoelektrischen Elements ergeben sich auch konstruktive Unterschiede gegenüber dem Anmeldungsgegenstand. Im allgemeinen ist es s erforderlich, daß das Meßelement potentialfrei arbeitet. Dadurch ist es notwendig, daß zusätzlich zu den beiden bereits notwendigen Kontaktscheiben für das piezoelektrische Element eine weitere Isolierscheibe zwischen den Kontakcscheiben und dem Gegenlager eingebaut ist. Die Kontaktierung der piezoelektrischen Keramikscheibe ist nur durch aufwendige Verschweißung eines Drahtes bzw. mit Hilfe einer Aussparung im Stempel möglich. Wählt man wiederum einen potentialfreien Sensor, so würde sich dieser Aufwand noch verdoppeln. Da das piezokeramische Element als diskretes Bauteil eingesetzt werden muß, baut es auch relativ teuer. Ferner sind mehrere aufwendige und das Meßsignal verfälschende Klebestellen erforderlich. Bereits im Normalfall bei einer piezoelektrischen Scheibe und zwei Kontakcscheiben ergeben sich dadurch vier Klebestellen; bei einem potentialfreien Sensor würde man auf fünf Klebestellen kommen. Aufgrund des zugrundeliegenden Meßprinzips muß der Stempel unbedingt senkrecht auf das piezoelektrische Element aufgeklebt werden. Piezokeramische Elemente weisen einen nachteiligen, relativ hohen Temperaturgang der Meßempfindlichkeit auf, der zwischen 15 % und 70 % im Anwendungstemperaturbereich liegen kann. Die Alterung über der Lebensdauer beträgt typisch 2 % bis 10 %. Die Hysterese der Piezokeramik von 5 % bis 25 % ist sehr hoch und schränkt dadurch die Genauigkeit der Brennraumdruckmessung deutlich ein. Insbesondere aber der mehrschichtige Aufbau der piezoelektrischen Anordnung macht einen relativ aufwendigen und komplizierten Einbau in das Gehäuse des Drucksensors notwendig. Bei piezoelektrischen Elementen wird im Unterschied zu piezoresistiven Elementen bei Druckeinwirkung zur Meßsignalerzeugung eine Ladung und somit eine Spannung erzeugt. Diese Spannung wird abgegriffen und ausgewertet. Im Unterschied hierzu wird bei piezoresistiven Elementen eine Spannung angelegt, und der elektrische Widerstand im piezoresistiven Element wird durch den einwirkenden Druck verändert. Da bei diesem Drucksensor das piezoelektrische Element und der Stempel von einer Seite in die Bohrung eingebaut wird und diese von einer Topfmembran verschlossen ist sind die Lage der Topfmembran und des piezoelektrischen Elemencs präzise aufeinander abzustimmen. Dies kann nur mit einer Topfmembran erreicht werden.

### Vorteile der Erfindung

Das erfindungsgemäße verfahren gemäß Patentanspruch 1 hat demgegenüber den Vorteil, daß piezoresistive Meßelemente prinzipiell potentialfrei sind, wenn sie auf einer isolierenden Unterlage realisiert werden. Dadurch sind keine zusätzlichen konstruktiven Maßnahmen mehr notwendig. Ferner bestehtein piezoresistives Meßelement nur aus einer Schicht. Wird als piezoresistives Element ein Dickschichtwiderstand verwendet, so kann dieser in besonders einfachen und somit äußerst preisgünstigen Standardtechniken aufgedruckt werden. Hierbei ist ein Drucken auf die kontaktierenden Leiterbahnen möglich, wobei an die Leiterbahnen die Anschlußleitungen angelötet werden können. Im Unterschied zum piezoelektrische Effekt sind beim piezoresistiven Element keine Klebestellen notwendig. Um ein Verrutschen bei der Montage zu verhindern, kann eventuell zwischen dem Substrat und dem Gegenlager eine Klebeschicht vorhanden sein. Ohne großen konstruktiven Aufwand kann eine homogene Krafteinleitung auf das piezoresistive. Element erreicht werden. Durch einfaches Anprägen einer weichen Stempelspitze an den Dickschichtwiderstand ist eine gleichmäßige Kraftverteilung über die gesamte belastete Fläche des Dickschichtwiderstands möglich. Es ist keine zusätzliche aufwendige Justage erforderlich. Piezoresistive Elemente, konkret Cermet-Dickschichtwiderstände haben einen geringen Temperaturgang der Meßempfindlichkeit, der nur zwischen 5 % und 10 % über den gesamten Anwendungstemperaturbereich gesehen beträgt. Die Alterung über der Lebensdauer der piezoresistiven Elemente ist sehr gering und liegt unter 2 %. Ferner weisen die piezoresistiven Elemente nahezu keine Hysterese auf; sie würde unter 1 % liegen. Bei der Verwendung von piezoresistiven Elementen können die am Ende des Stempels auftretenden Rauhigkeiten in einfacher Weise ausgeglichen werden. Durch die Verwendung eines relativ weichen Materials für den Stempel, aber insbesondere durch die Verwendung eines weichen Materials für das dem piezoresistiven Element zugewandte Ende des Stempels ist eine gleichmäßige Krafteinleitung über den gesamten Berührungsbereich möglich.

Durch die Verwendung eines. piezoresistiven Meßelements können auch von der Topfmembran abweichende, alternative un preisgünstige Membrankonstruktionen verwendet werden. Es muß keine präzise vorbestimmte Position vorhanden sein. Vielmehr ist es möglich, erst während des Einbaus die beiden Teile Membrane und Meßelement aufeinander abzustimmen.

Während des Anprägens des Stempels auf die das piezoresistive Element umgebende Glasschicht und der Einstellung der Vorspannung werden die elekrischen Größen des piezoresistiven Meßelements bzw. dessen Auswerteelektronik gemessen und auf einen gewünschten Sollwert eingestellt. Dadurch ist in einfacher und preisgünstiger Weise ohne mechanisch exakte Justierung ein genauer Abgleich möglich.

Durch die im abhängigen Patentanspruch aufgeführte Maßnahme ist eine vorteilhafte Weiterbildung des beanspruchten Verfahrens möglich.

### Zeichnung

Ein Ausführungsbeispiel der Erfindung ist in der Zeichnung dargestellt und in der nachfolgenden Beschreibung näher erläutert. Figur 1 zeigen einen Schnitt durch einen Druckgeber, Figur 2 eine Einzelheit und die Figuren 3 bis 16 verschiedene Abwandlungen der Form der Membrane, des Endes des Stempels und des Gehäuseschaftes.

### Beschreibung des Ausführungsbeispiels

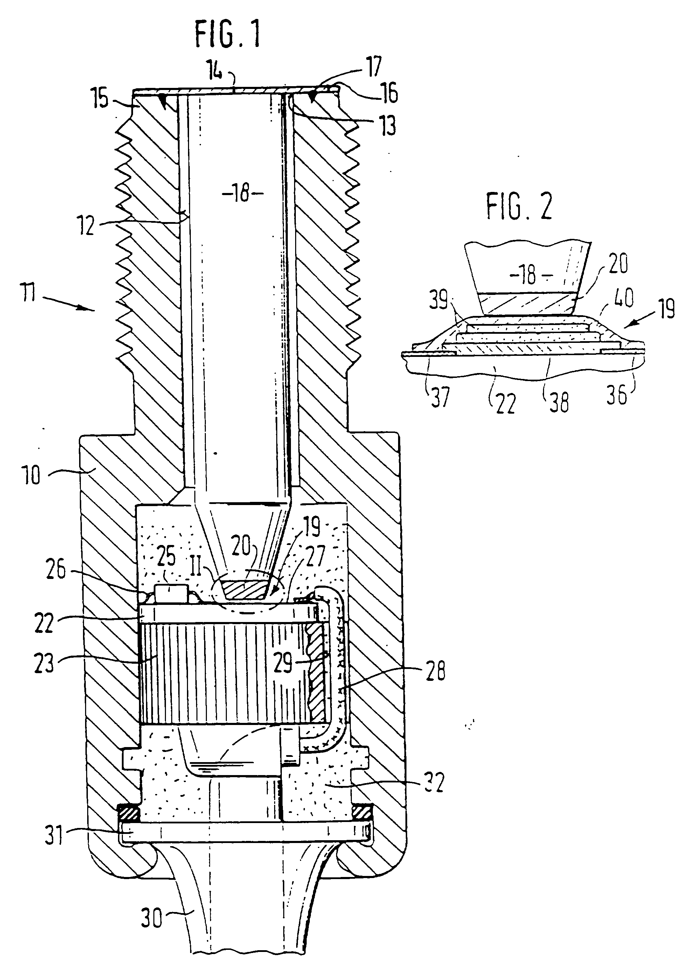

In der Figur 1 ist mit 10 das Gehäuse eines Drucksensors 11 zur Bestimmung des Drucks im Brennraum einer Brennkraftmaschine bezeichnet. Es weist eine mittige, durchgehende, abgesetzte Bohrung 12 auf. Die dem Brennraum zugewandte Öffnung 13 des Gehäuses 10 wird von einer Membran 14 abgeschlossen. In der Figur 1 ist die Membran 14 als Platte ausgebildet, die auf die Stirnseite 16 des Schafts 15 des Gehäuses 10 mit Hilfe einer Schweißverbindung 17 befestigt ist. Besonders vorteilhaft ist die Membran 14 aus einer Superlegierung, das heißt aus einer Legierung von zum Beispiel ca. 50 % Ni, 20 % Cr, 20 % Fe ausgebildet. Am mittleren Bereich der Membran 14 liegt ein Stempel 18 mit seinem einen Ende an, der mit seinem anderen Ende an einem piezoresistiven Meßelement 19 anliegt. Unter piezoresistiven Meßelementen sind Elemente zu verstehen, die ihren Widerstandswert unter Druckeinwirkung ändern. Hierzu können zum Beispiel Dickschichtwiderstände verwendet werden. Als Materialen können hierzu Cermet, Contactivplastic oder Metall etc. Verwendung finden. Das Meßelement 19 ist auf den Träger 20 eines Hybrids 21 aufgedruckt. Unter einem Hybrid ist normalerweise ein Träger mit aufgedruckten Schaltungsteilen, wie zum Beispiel Widerständen und Leiterbahnen etc. mit Halbleitern wie ICs - (integrated circuit), die auf den Träger aufgesetzt sind und mit den Schaltungsteilen zum Beispiel durch Bonddrähte verbunden sind, zu verstehen. Der Stempel 18 selbst kann aus Glaskeramik bestehen, um somit eine gute Wärmeisolierung zwischen der Membran, das heißt zwischen dem Druckraum, dessen Druck bestimmt werden soll, und dem piezoresistiven Meßelement zu gewährleisten. Das dem Hybrid 21 zugewandte Ende des Stempels 18 kann konisch ausgebildet sein, so daß sein Ende etwa den Durchmesser des Meßelements 19 aufweist. Dadurch ist es möglich, den Stempel 18 in der Bohrung 12 zu führen, hingegen aber den Bereich der Druckübertragung auf die Größe des Meßelements 19 zu begrenzen. Der Träger 20 des Hybrids liegt ferner an einem in die Bohrung 12 eingepreßten Gegenlagers 23 an.

Die konische Ausbildung-des Endes des Stempels 18 kann notwendig sein, um die sich überdeckenden Flächen des piezoresistiven Meßelements 19 und des Endes des Stempels 18 ungefähr aufeinander abzustimmen. Würde man hingegen den gesamten Stempel in seinem Durchmesser verringern, so könnte der Stempel eventuell bei der Druckübertragung abbrechen. Um eine möglichst definierte Krafteinleitung vom Stempel auf das piezoresistive Meßelement 19 zu gewährleisten, ist der Stempel 18 wenigstens im Endbereich 20 aus einem relativ weichen Werkstoff hergestellt. Dadurch ist es möglich, daß sich Oberflächenrauhigkeiten des Stempelendes nicht als Meßfehler im piezoresistiven Meßelement 19 auswirken können, indem so ein Formschluß zwischen der Stirnfläche des Stempelendes und der Oberfläche des piezoresistiven Meßelements erreicht wird. Ferner wäre es auch denkbar, den gesamten Stempel 18 aus einem weichen Material herzustellen. Dadurch würde man aber wiederum die Steifigkeit des Stempels 18 negativ beeinflussen. Bei der Auswahl des Materials für den Stempel 18 ist auch zu berücksichtigen, daß der Stempel eine möglichst geringe Wärmeleitfähigkeit aufweisen soll, so daß die Meßsignale nicht durch Temperaturschwankungen oder durch eine Beeinflussung durch die Temperatur selbst verfälscht werden. Eine gute geringe Wärmeleitfähigkeit weist zum Beispiel Glaskeramik auf. Als Material für den Bereich 20 des Stempels 18 kann zum Beispiel relativ weiches Metall, zum Beispiel Al, Messing, Cu, Kunststoff etc. verwendet werden. Das Material für den Bereich 20 braucht nicht auf die geringe Wärmeleitfähigkeit abgestimmt sein.

Neben dem piezoresistiven Meßelement 19 befinden sich auf derselben Seite des Trägers des Hybrids 22 auch die elektronischen Bauteile 25 der Auswerteschaltung, wie zum Beispiel Widerstände, Transistoren, etc. Die elektronischen Halbleiterbauteile 25 und das piezoresistive Meßelement 19 sind mit Hilfe von Bonddrähten 26 und Dickschichtleiterbahnen 27 verbunden. Über eine Leitung 28 wird der Ausgang der Aufbereitungsschaltung zu einer nicht dargestellten Auswerteschaltung und Steuereinrichtung der Brennkraftmaschine geführt. Hierzu weist das Gegenlager 23 eine etwa achsparallel zur Bohrung 12 verlaufende, durchgehende Bohrung 29 auf, in der die Ableitleitung 28 geführt wird. Die Leitung 28 ist in einer Tülle 30 des die Bohrung 12 abschließenden Deckels 31 befestigt. Zum Schutz vor schädlichen Umwelteinflüssen, wie zum Beispiel Feuchtigkeit, ist die Bohrung 12 im Bereich des piezoresistiven Meßelements 19 und der elektronischen Bauteile 25 und im Bereich zwischen dem Gegenlager 23 und dem Deckel 31 mit einer Vergußmasse 32 ausgegossen.

Statt einer Bohrung 29 kann auch am Gegenlager 23 ein Segment zur Durchführung der Leitung 28 ausgeschnitten sein. Das Gegenlager 23 kann aber auch in eine Bohrung 12 des Gehäuses 10 eingeschraubt sein.

In der Figur 2 ist die Ausbildung des piezoresistiven Meßelements dargestellt. Auf dem Träger des Hybrids 22 aus Al₂O₃-Substrat sind eine erste (36) und eine zweite Leiterbahn 37 aufgedruckt. Zwischen den beiden Leiterbahnen 36, 37 ist eine erste Widerstandsschicht 38 aufgedruckt, wobei die Enden der Widerstandsbahn 38 mit den Enden der beiden Leiterbahnen 36, 37 überlappen, um einen elektrischen Kontakt herzustellehi. Auf diese erste Widerstandsbahn 38 sind schichtartig mehrere weitere Widerstandsbahnen 39 aufgedruckt. Diese weiteren Widerstandsbahnen sind dabei so angeordnet, daß eine Art Pyramide entsteht, was bedeutet, daß die Widerstände in aufsteigender Schichtenfolge jeweils kürzer ausgebildet sind und sich somit im Randbereich nicht überdecken oder überlappen. Die gesamte pyramidenförmige Anordnung der Widerstandsbahnen 38, 39 und wenigstens die Enden der Leiterbahnen sind mit einer Glasschicht 40, hergestellt aus einer Glaspaste, überdeckt, um eine elektrische Isolierung zu erreichen. Das Ende des Stempels 18 liegt mit seinem Bereich 20 so auf der Glasschicht 40 bzw. auf der letzten der Widerstandsbahnen 39 auf, daß der Stempel 18 ziemlich zentral nur auf dieser Widerstandsbahn 39 aufsetzt. Dies bedeutet, daß die Kraft ausschließlich im Bereich der obersten Widerstandsschicht eingeleitet wird und so Kraftnebenschlüsse vermieden werden.

Für eine besonders homogene Krafteinleitung auf das piezoresistive Element 19 sollte der Stempel 18 eine weiche Spitze 20 aus z. B. Al. Messing, Cu, Kunststoff, etc. aufweisen. Mit dieser weichen Spitze ist der Stempel auf das piezoresistive Element 19 und hier insbesondere auf die Glasschicht 40 aufzudrücken. Der Druck sollte hierzu größer sein als der später zu bestimmende Druck. Hierzu kann ein Vielfaches des Maximaldrucks auf die Membran und den Stempel aufgebracht werden oder auch beim Einpressen des Gegenlagers 22 die vorgesehene Position bewußt überpreßt werden. Hierdurch entsteht eine Anprägung des weichen Stempelendes.

Es ist aber auch möglich, statt einem einzigen piezoresistiven Meßelement mit einer pyramidenförmigen Ausbildung zusätzlich noch ein weiteres piezoresistives Meßelement auf dem Hybrid 22 anzuordnen oder gar 4 Meßelemente. Hierbei sind diese Widerstandselemente in einer Wheatstone'schen Halb- oder Vollbrückenschaltung miteinander verschaltet. Eines der beiden oder 2 von vier piezoresistiven Meßelemente wird dann vom Stempel 18 mit Druck beaufschlagt, während das andere piezoresistive Meßelement oder beide andere Meßelemente möglichst nahe im Bereich des ersten oder den beiden ersten piezoresistiven Meßelementen angeordnet sind, aber nicht mit Druck beaufschlagt sind. Dadurch ist es möglich, eine Temperaturkompensation durchzuführen, ohne zusätzliche elektronische Bauteile für eine Kompensation von Temperaturschwankungen in der Auswerteschaltung vorsehen zu müssen.

Die verschiedenen Widerstandsbahnen 38, 39 können in oder quer zur Richtung des die Widerstandsbahnen durchfließenden Stroms gedrückt werden.

Durch die Anordnung des piezoresistiven Meßelements 19 sind besonders gute Meßwerte möglich. Ferner ist durch die Anordnung der Bauteile 25 auf einem Hybrid 22 eine besonders einfache Montage des Drucksensors 11 möglich. Außerhalb des Gehäuses 10 kann das piezoresistive Element 19, die elektronischen Bauteile 25 und das Gegenlager 23 mit den Ableitungen 28 als eine Baueinheit vormontiert werden. Bereits außerhalb des Gehäuses 10 des Drucksensors 11 können somit die Bauteile 25 und daspiezoresistive Meßelement 19 auf seine Funktionsfähigkeit hin überprüft werden. Bei der Endmontage braucht somit nur noch die vormontierte, bereits überprüfte Einheit von einer Öffnung der Bohrung 12 her in das Gehäuse mit eingelegtem Stempel 10 eingeschoben werden, bis der Stempel sie an der Membran 14 anliegt. Da das Gegenlager 23 in das Gehäuse 10 eingepreßt ist, ist die Einheit im Gehäuse 10 leicht zentriert und fixiert.

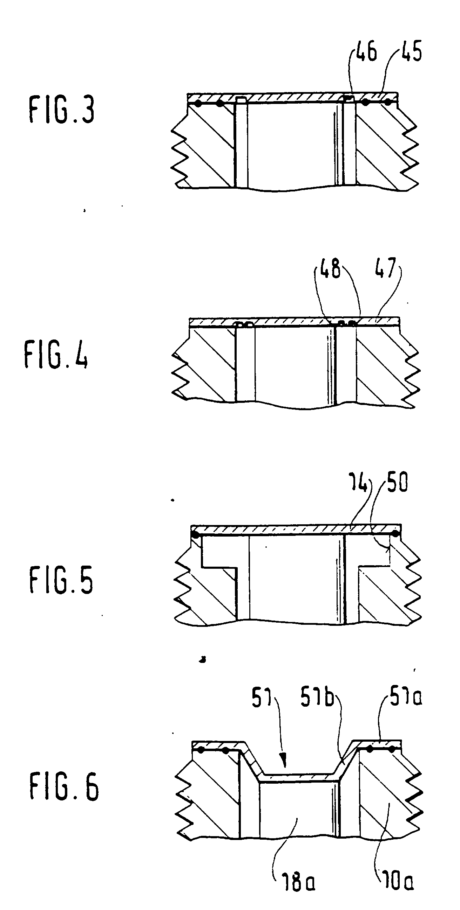

Da keine exakte mechanische Justierung zwischen dem piezoresistiven Meßelement 19 und der Membran 14 notwendig ist, können die verschiedensten Abwandlungen der Membran und des Schaftes des Gehäuses, wie sie in den Figuren 3 bis 16 dargestellt Sind, verwendet weiden. Die Membranen werden hierbei auf das leere Gehäuse 10 aufgeschweißt. Da, im Unterschied zum Stand der Technik, ein Einbau des Stempels 18 und des piezoresistiven Meßelements 19 durch eine zweite Öffnung des Gehäuses möglich ist. ist eine Gesamtabstimmung Membran, Stempel und piezoresistives Element erst im eingebauten Endzustand nötig und möglich. Die Membran kann somit mit großen Toleranzen auf den Schaft des Gehäuses aufgesetzt werden. Die in der Figur 1 dargestelle plattenförmige Membran stelle die einfache Lösung dar. Sie hat aber keine besondere Biegezone, so daß nur bedingt eine exakte Meßsignalgewinnung erreicht werden kann. Die Membran 45 nach der Abwandlung nach Figur 3 weist zwischen dem Schaft 16 des Gehäuses 10 in der dem Stempel 18 zugewandten Wand eine Ringnut 46 auf. Im Bereich dieser Ringnut 46 ist die Membran 45 besonders leicht biegbar, so daß auch geringe Drücke erfaßt werden können. Die Membran 47 nach der Figur 4 stellt eine Verbesserung der Meßempfindlichkeit gegenüber der Membran 45 nach der Figur 3 dar.

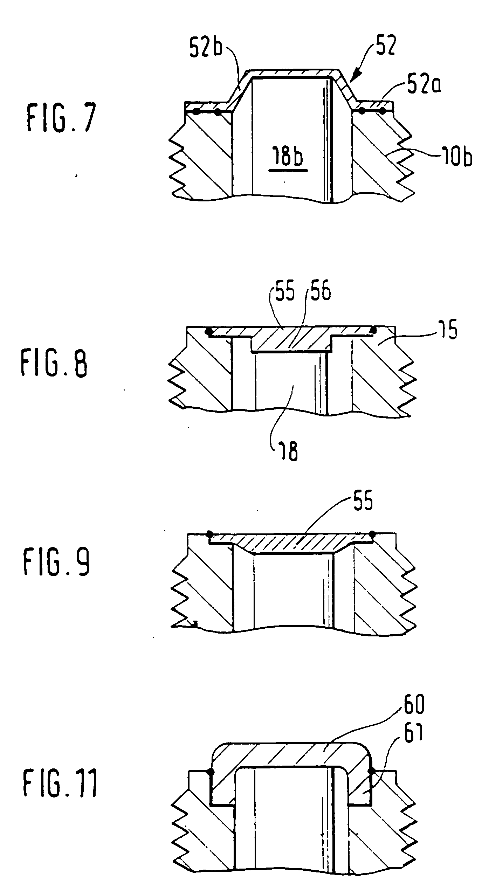

Hier sind statt einer Ringnut 46 zwei schmale Ringnuten 48 nebeneinander ausgebildet. Es ist selbstverständlich auch möglich, die Anzahl der Ringnuten zur Verbesserung der Meßempfindlichkeit noch zu erhöhen. Bei der Abwandlung nach der Figur 5 wird der Biegebereich durch eine Ausnehmung 50 im Bereich der Öffnung des Gehäuses 10 erreicht, während als Membran eine Platte 14, wie in Figur 1, verwendet wird. Die in den Figuren 6 und 7 dargestellten Membranen 51 bzw. 52 sind kinematische Umkehrungen. Während in der Figur 6 der Stempel 18a gegenüber dem Gehäuse 10a verkürzt ist, ist der Stempel 18b in der Figur 7 gegenüber dem Gehäuse 10b erlängert. Dadurch ergibt sich für die Membran 51 bzw. 52 jeweils ein Auflagebereich 51a bzw. 52a auf dem Schaft des Gehäuses und dem Stempel und dazwischen ein schräg verlaufender Biegebereich 51b bzw. 52b. Der Schaft des Gehäuses nach den Figuren 8, 9, 10a, b, 11, 13, 15, 17 weist wieder eine Ausnehmung 50, wie in Figur 5, auf, in der aber die Membran angeordnet ist. In der Figur 8 hat die Membran 55 im Bereich des Stempels 18 einen Fortsatz 56, mit dem sie auf dem gegenüber dem Schaft 15 verkürzt ausgebildeten Stempel 18 aufliegt. Wie aus den Figuren 8 und 9 ersichtlich ist, sind verschiedene Möglichkeiten denkbar, die unterschiedliche Dicke der Membran 55 im Bereich der Auflage auf dem Schaft 15 und auf dem Stempel 18 auszugleichen. In der Figur 9 ist die Membran 55 in diesem Bereich konisch. In der Figur 11 ist der Stempel 18 wieder länger als der Schaft 15 ausgebildet. Die Membran 60 hat die Form eines Topfes, umgreift aber nicht den Schaft des Gehäuses, sondern liegt an der Wand 61 der Ausnehmung 50 an.

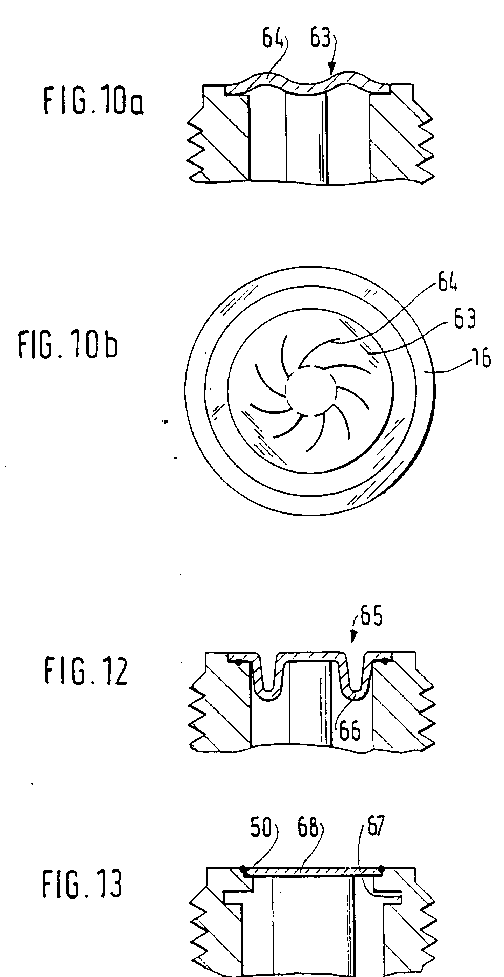

In den Figuren 10a, b, 12 und 13 schließt der Stempel 18 ungefähr bündig mit dem Boden der Ausnehmung 50 im Schaft des Gehäuses 10 ab. Die in den Figuren 10a, b dargestellte Membran 63 weist als Biegebereich dienende Wellen 64 auf, die spiralförmig tangential auslaufende Dellen darstellen. In der Figur 12 ist der Biegebereich der Membran 65 eine umlaufende Welle 66. Je nach der Höhe dieser Welle 66 kann die Empfindlichkeit der Membran 65 variiert werden. Als Biegebereich dient bei der Ausbildung nach der Figur 13 eine im Schaft 16 ausgebildete Ringnut 67. Die Membran 68 selbst ist wieder eine Platte, wie sie bereits beim Ausführungbeispiel nach der Figur 5 verwendet wird. Die Membran 65 kann dabei in der Ausnehmung 50 angeordnet sein, oder auf die Stirnseite des Schafts 15 aufgeschweißt sein.

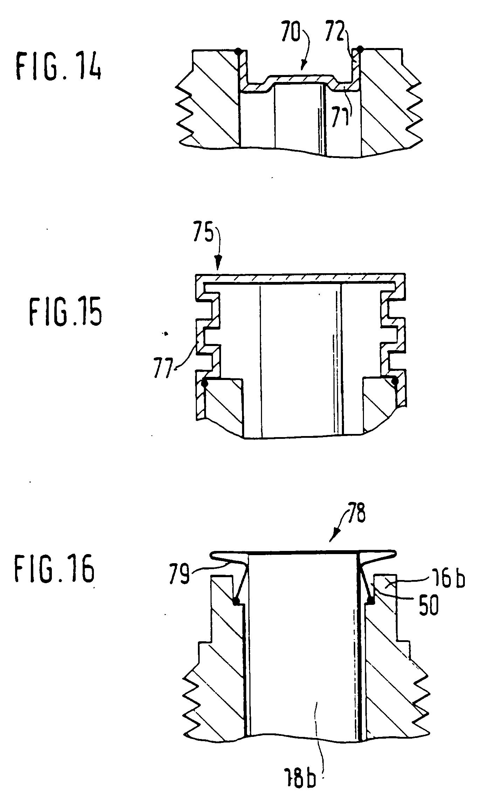

Die Figur 14 zeigt einen Druckgeber mit einem gegenüber dem Schaft 16 verkürzten Stempel 69. Die Membran 70 ist annähernd topfförmig ausgebildet und weist im Biegebereich einen ansteigenden Verlauf 71 auf. Die Wand 72 der Membran 70 liegt an der Innenwand des Schafts 15 an.

Die beiden Membranen 75 und 78 nach den Figuren 15 und 16 weisen im eigentlichen Meßbereich keine Durchbiegung sondern federnde Eigenschaften auf. Die Membran 75 hat hierzu im Bereich des über den Schaft 15 hinausragenden Schaftbereichs einen im Querschnitt gesehenen Zick-Zack-Bereich 77. In diesem Bereich 77 ist die Membran 75 federnd ausgebildet. In der Figur 16 hat die Membran 78 einen im Querschnitt gesehenen s-förmigen Bereich 79. Hierbei ragt der Stempel 18 wieder über den Schaft 15 hinaus und die Membran 78 ist in der Ausnehmung 50 festgeschweißt.

## Patentansprüche

1. Verfahren zur Herstellung eines Druckgebers (11) zur Druckerfassung im Brennraum von Brennkraftmaschinen, insbesondere von Kraftfahrzeugen, wobei eine Membran (14) ohne mechanische Justage bezüglich eines piezoresistiven Meßelements (19) eine erste Öffnung verschließend auf den Schaft (15) des Gehäuses (10) des Druckgebers (11) aufgebracht wird und ein Stempel (18) und das piezoresistive Meßelement (19) durch eine zweite Öffnung in den Schaft (15) des Gehäuses (10) eingeschoben werden und so auf die Membran (14) aufgepreßt werden, daß sich zwischen dem Stempel (18) und dem Meßelement (19) ein formschlüssiger Kraftschluß ergibt, und wobei für einen genauen Abgleich die elektrischen Größen des piezoresistiven Meßelements (19) bzw. dessen Auswerteelektronik gemessen und auf einen gewünschten Sollwert eingestellt werden.

2. Verfahren nach Anspruch 1, dadurch gekennzeichnet, daß ein Gegenlager (22) für den Stempel (18) soweit in das Gehäuse (10) eingepreßt wird, daß sich eine Anprägung des Stempels (18) auf dem piezoresistiven Element (19) oder auf der das piezoresistive Element (19) umgebenden Glasschicht (26) ergibt.

## Claims

1. Process for producing a pressure sensor (11) for detecting the pressure in the combustion chamber of internal-combustion engines, in particular of motor vehicles, a diaphragm (14) being mounted such that it closes a first opening, onto the shank (15) of the housing (10) of the pressure sensor (11) without mechanical adjustment in relation to a piezoresistive measuring element (19) and a punch (18) and the piezoresistive measuring element (19) being pushed through a second opening into the shank (15) of the housing (10) and pressed onto the diaphragm (14) in such a way that an interlocking frictional connection is produced between the punch (18) and the measuring eloment (19), and, for exact trimming, the electrical variables of the piezoresistive measuring element (19) and of its evaluation electronics being measured and set to a desired nominal value.

2. Process according to Claim 1, characterised in that a counterbearing (23) for the punch (18) is pressed so far into the housing (10) that an impression of the punch (18) on the piezoresistive element (19) or on the glass layer (26) surrounding the piezoresistive element (19) is produced.

## Revendications

1. Procédé de fabrication d'un capteur de pression (11) pour déterminer la pression régnant dans la chambre de combustion d'un moteur à combustion interne, notamment de véhicules automobiles, une membrane (14) sans ajustage mécanique par rapport à un élément de mesure piézorésistant étant appliquée, de manière à fermer une première ouverture, sur le corps (15) du boîtier (10) du capteur de pression (11), et un poinçon (18) ainsi que 1'élément de mesure piézorésistant (19) sont glissés à travers une seconde ouverture dans le corps (15) du boîtier (10) et sont pressés ainsi sur la membrane (14) pour avoir un flux de force par une liaison de forme entre le poinçon (18) et l'élément de mesure (19) et, pour un équilibrage exact, on mesure les grandeurs électriques de l'élément de mesure piézo-électrique (19) ou de son électronique d'exploitation et on règle sur une valeur de consigne souhaitée.

2. Procédé selon la revendication 1, caractérisé en ce qu'un contre-appui (22) pour le poinçon (18) est pressé dans. le boîtier (10) pour avoir un écrasement du poinçon (18) sur l'élément piézorésistant (19) ou sur une couche de verre (26) entourant l'élément piézorésistant (19).
